# EUROPÄISCHE PATENTANMELDUNG

(11) **EP 4 223 440 A1**
(43) Veröffentlichungstag der Anmeldung: **09.08.2023**
(21) Anmeldenummer: 23154632.6
(22) Anmeldetag: 02.02.2023
(51) Int. Cl.: B23B 51/10

(54) **VORRICHTUNG ZUM ERZEUGEN EINER FASE AM RAND EINER BOHRUNG ZUM EINSETZEN EINER HOHLWANDDOSE**

(30) Priorität: 04.02.2022 DE 102022102700
(71) Anmelder: Wolfcraft GmbH, 56746 Kempenich (DE)
(72) Erfinder: Hilger, Frank, 56745 Weibern (DE); Fronczak, Christof, 56754 Dünfus (DE)
(74) Vertreter: Grundmann, Dirk

(57) **Zusammenfassung**

Die Erfindung betrifft eine Vorrichtung zum Erzeugen einer Fase (2) am Rande einer Bohrung (1) zum Einsetzen einer Hohlwanddose, mit einem Grundkörper (13), der eine von einem in die Bohrung (1) einsteckbaren Zentrierfortsatz (3) gebildeten, zumindest bereichsweise sich auf einer Zylindermantelfläche um eine Achse (A) erstreckende Führungsflanke (4) ausbildet, wobei an die Führungsflanke (4) eine sich quer zur Achse (A) erstreckende Anschlagfläche (5) angrenzt, wobei die Führungsflanke (4) und die Anschlagfläche (5) einen sich um die Achse (A) erstreckenden Ringraum begrenzen, in den Schneidkanten (8) von Schneiden (7) ragen, und mit einem vom Grundkörper (13) ausgebildeten Antriebselement zum Erzeugen einer Drehung der Schneiden (7) um die Achse (A). Das Antriebselement ist ein Griff (12), der einen Durchmesser von etwa einer Handbreite aufweist, so dass er von einer Hand eines Benutzers umgreifbar ist. Der Zentrierfortsatz (3) ist materialeinheitlich dem Griff (12) angeformt.

## Beschreibung

### Gebiet der Technik

Die Erfindung betrifft eine Vorrichtung zum Erzeugen einer Fase am Rande einer Bohrung zum Einsetzen einer Hohlwanddose, mit einem Grundkörper, der eine von einem in die Bohrung einsteckbaren Zentrierfortsatz gebildeten, zumindest bereichsweise sich auf einer Zylindermantelfläche um eine Achse erstreckende Führungsflanke ausbildet, wobei an die Führungsflanke eine sich quer zur Achse erstreckende Anschlagfläche angrenzt, wobei die Führungsflanke und die Anschlagfläche einen sich um die Achse erstreckenden Ringraum ausbilden, in den Schneidkanten von Schneiden ragen, und mit einem vom Grundkörper ausgebildeten Antriebselement zum Erzeugen einer Drehung der Schneiden um die Achse.

### Stand der Technik

Die DE 40 16 927 A1 beschreibt eine Fräskrone in Form einer Lochsäge, mit der eine Bohrung zum Einsetzen einer Hohlwanddose in eine Trockenbauwand gefertigt werden kann. Die Schrift beschreibt ferner einen glockenförmigen Zusatz mit einer sich auf einer Kreisringfläche erstreckenden Anschlagfläche, von der Schneiden abragen, mit denen der Rand der Bohrung angefast werden kann, damit sich dort ein radialer Fortsatz einer Hohlwanddose abstützen kann.

Eine ähnliche Vorrichtung wird von der DE 20 2021 101 585 U1 beschrieben.

Aus der DE 296 07 213 U1 ist ein Mehrbereichs-Fasensenker mit Wendeschneidplatte bekannt, mit dem Ränder einer Bohrung angefast werden können.

Die US 10,919,140 B2 beschreibt ein Schraubwerkzeug mit einem breiten, sechskantförmigen Griff.

### Zusammenfassung der Erfindung

Der Erfindung liegt die Aufgabe zugrunde, ein mit geringem Aufwand herstellbares und einfach handhabbares Werkzeug anzugeben, mit dem am Rand einer Bohrung zum Einsetzen einer Hohlwanddose eine Fase hergestellt werden kann.

Gelöst wird die Aufgabe durch die in den Ansprüchen angegebene Erfindung. Die Unteransprüche stellen nicht nur vorteilhafte Weiterbildungen der im Anspruch 1 angegebenen Erfindung, sondern eigenständige Lösungen der Aufgabe dar.

Zunächst und im Wesentlichen wird eine Vorrichtung vorgeschlagen, die einen Zentrierfortsatz ausbildet, der in die vorgefertigte Bohrung eingesetzt werden kann. Der Zentrierfortsatz hat bevorzugt die Form eines Zylinders oder nahezu eines Zylinders und bildet mit seiner Zylindermantelfläche eine Führungsflanke aus, die an der Innenwand der Bohrung anliegen kann. An die Führungsflanke schließt sich eine bevorzugt oder nahezu ringförmige Anschlagfläche an, bis zu der die Vorrichtung in die Bohrung eingesteckt werden kann. Der an die Anschlagfläche angrenzende Bereich der Führungsflanke und der an die Führungsflanke angrenzende Bereich der Anschlagfläche begrenzen einen Ringraum, der in einer Axialrichtung und in einer Radialrichtung offen ist. In diesen Ringraum greift zumindest eine Schneide mit einer Schneidkante ein, die bei einer Drehung der Vorrichtung in einer Drehrichtung um eine Achse an der Randkante der Bohrung eine Fase schneidet. Dabei kann sich die Vorrichtung weiter in die Bohrung hineinverlagern, bis die Anschlagfläche an den die Bohrung umgebenden Bereich der Trockenbauwand anschlägt. Erfindungsgemäß ist zum Antrieb der Vorrichtung ein Griff vorgesehen. Der Griff ist derart gestaltet, dass er von der Hand eines Benutzers umgreifbar ist. Es ist insbesondere vorgesehen, dass der Griff einen minimalen Durchmesser aufweist, der größer ist als der Durchmesser des Zentrierfortsatzes bzw. des äußeren Randes der Anschlagfläche.

Der Durchmesser des Griffs beträgt bevorzugt eine Handbreite.

Gemäß einer Weiterbildung der Erfindung kann der Grundkörper von einem Hohlkörper ausgebildet sein. Der Grundkörper kann eine dünne Wand aufweisen. Diese Wand bildet bevorzugt die Führungsflanke, die Anschlagfläche und eine Grifffläche des Griffs. Die Wand des Grundkörpers ist bevorzugt dünner als die axiale Höhe der Führungsflanke oder dünner als die radiale Breite der Anschlagfläche. Der Grundkörper kann eine Schalenform aufweisen. Hierzu kann der Grundkörper an seinem den Griff ausbildenden Ende offen sein. Eine Öffnung des Grundkörpers kann aber auch im Bereich der Stirnseite des Zentrierfortsatzes vorgesehen sein. Die Stirnseite des Zentrierfortsatzes kann aber auch von einem Boden verschlossen sein. Es kann auch vorgesehen sein, dass eine dem Griff zugeordnete Stirnseite geschlossen ist. Eine Fläche, die die Stirnseite verschließt, kann Fenster aufweisen. Die Bodenfläche kann bogenförmige Schlitze besitzen, die nach innen und außen offen sind. Der Griff kann eine Grifffläche aufweisen, die sich zumindest bereichsweise auf einer Zylindermantelfläche erstreckt. Die Zylindermantelfläche kann leicht konisch verlaufen. Von dieser Zylindermantelfläche können Flügel abragen. Es können mehrere, in einem gleichmäßigen Winkelabstand um die Achse der Vorrichtung angeordnete Flügel vorgesehen sein. Die Grifffläche kann Rippen und Nuten aufweisen. Die Rippen und Nuten können sich in einer axialen Richtung erstrecken. Der Durchmesser einer eine Grifffläche definierenden insbesondere leicht konischen Zylindermantelfläche kann größer sein als ein radial äußerer Rand der ringförmigen Anschlagfläche. Der Übergang zwischen dem Rand der Anschlagfläche und der Grifffläche kann von einem Konusabschnitt ausgebildet sein. Der Konusabschnitt besitzt eine Außenfläche, die sich auf einer Kegelstumpfmantelfläche erstreckt. Eine gedachte, zur Spitze des Kegels verlängerte Kegelstumpfmantelfläche schneidet bevorzugt die Führungsflanke. Die Konusfläche kann sich bis über die Flügel erstrecken. Sie bildet dort eine erweiterte Konusfläche. In einer Weiterbildung der Erfindung besitzt der Ringraum, der von der Führungsflanke und der Anschlagfläche ausgebildet ist, Fenster. Die Fenster sind Öffnungen der Wand des Grundkörpers. Die Fenster erstrecken sich bevorzugt sowohl über die Anschlagfläche als auch über die Führungsflanke und sind in einer Drehrichtung sowohl vor als auch nach der Schneidkante angeordnet. Die Schneiden liegen bevorzugt in einem mittleren Bereich eines Fensters. Durch die Fenster kann eine Spanabfuhr erfolgen. In einer Weiterbildung ist vorgesehen, dass die Schneiden in Taschen des Grundkörpers angeordnet sind. Die Taschen können auf der Innenseite der Wand des Grundkörpers vorgesehen sein. Bevorzugt sind die Taschen aber auf der Außenseite des Grundkörpers angeordnet. Die Umrisskontur der Taschen entspricht der Umrisskontur eines Befestigungsabschnittes einer Schneide, so dass die Schneide mit geringem Bewegungsspiel in jeweils einer Tasche einliegen kann. Die Schneiden werden von Klingen ausgebildet. Die Klingen erstrecken sich in einer Parallelfläche zur Konusfläche. Die Schneider verlaufen somit auf einer zweiten Konusfläche, die innerhalb der ersten Konusfläche verläuft, die eine Mantelfläche des Griffs ausbildet. Die Schneide kann eine Öffnung aufweisen, durch die ein Befestigungselement insbesondere in Form einer Schraube hindurchgreift, mit dem die Schneide gegen den Boden der Tasche befestigt ist. Die Tasche besitzt eine Öffnung, die in das Fenster des Ringraums hineingreift. Durch diese Öffnung erstreckt sich der die Schneidkante ausbildende Abschnitt der Schneide in das Fenster. Gemäß einer Weiterbildung der Erfindung kann sich an die Führungsflanke eine kegelstumpfförmige Findungsflanke anschließen, die in eine Stirnseite des Zentrierfortsatzes übergehen kann. Die Stirnseite des Zentrierfortsatzes kann hohl sein. Ein zurückspringender Boden kann einen konusförmigen Rand aufweisen, der in den Rand des Zentrierfortsatzes übergehen kann.

Es wird als vorteilhaft angesehen, dass das Werkzeug als einteiliges Kunststoffteil ausgebildet ist, bei dem der Zentrierfortsatz materialeinheitlich dem Griff angeformt ist, und dass das Werkzeug ein Hohlkörper ist, der insbesondere griffseitig offen ist, wobei die axiale Länge des Werkzeuges bevorzugt geringer ist als der Durchmesser des Griffs, und besonders bevorzugt geringer ist als der halbe Durchmesser des Griffs.

### Kurze Beschreibung der Zeichnungen

Ein Ausführungsbeispiel der Erfindung wird nachfolgend anhand beigefügter Zeichnungen erläutert. Es zeigen:

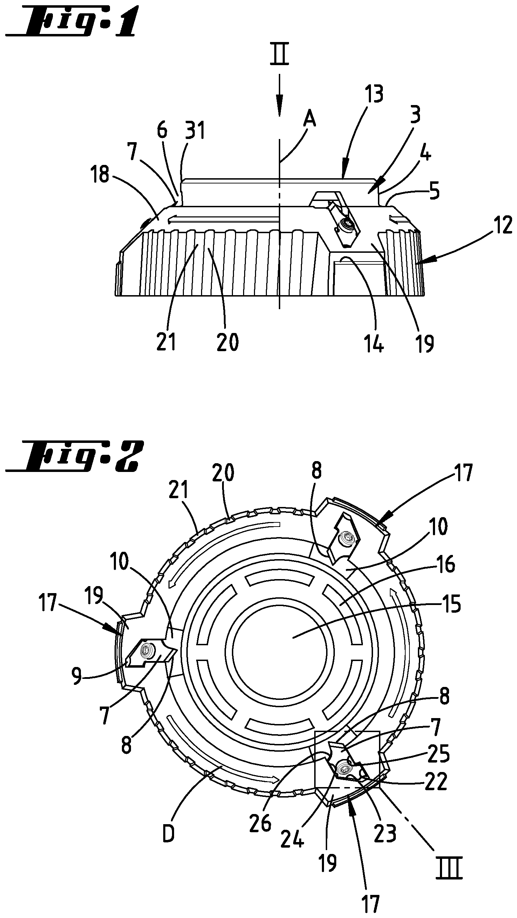

- Fig. 1: eine Seitenansicht auf einen Fasensenker;
- Fig. 2: eine Draufsicht auf den Fasensenker (Blickrichtung Pfeil II in Fig. 1);
- Fig. 3: vergrößert eine Schneide 7;
- Fig. 4: einen Längsschnitt des Fasensenkers mit einer eine Bohrung 1 aufweisenden Trockenbauwand, in die mit dem Fasensenker eine Fase 2 eingearbeitet worden ist;

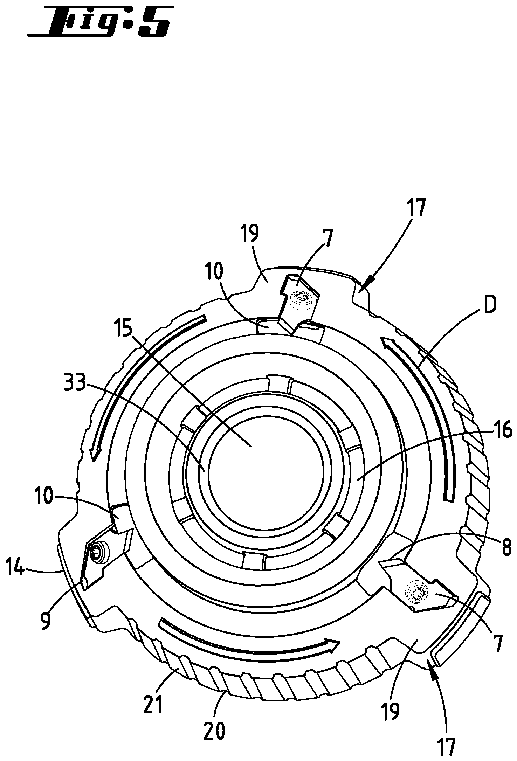

- Fig. 5: eine erste perspektivische Darstellung des Fasensenkers und

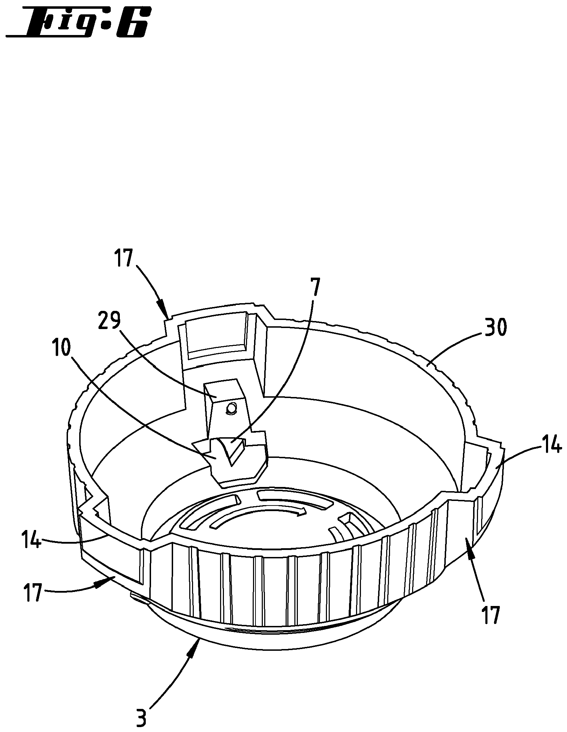

- Fig. 6: eine zweite perspektivische Darstellung des Fasensenkers.

### Beschreibung der Ausführungsformen

Das in den Zeichnungen dargestellte Werkzeug ist ein Fasensenker, mit dem in den Rand einer bereits vorgefertigten Bohrung 1 zum Einsetzen einer Hohlwanddose eine Fase 2 eingearbeitet werden kann, in der sich später ein ringförmiger Wulst der Hohlwanddose abstützen kann.

Das Werkzeug besteht bevorzugt aus einem aus Kunststoff gefertigten Grundkörper 13, der eine dünne Wand 14 ausbildet. Die Wand 14 besitzt im Wesentlichen überall dieselbe Wandstärke, die 1 mm bis 3 mm oder bis zu 5 mm betragen kann. Der Grundkörper 13 hat eine schalenförmige Gestalt und bildet eine bis auf eine Stirnfläche im Wesentlichen geschlossene Höhlung aus. Die Stirnflächenöffnung der Höhlung wird von einem Rand 30 eines Griffs 12 ausgebildet. Der Griff 12 kann eine leicht konisch verlaufende Außenfläche besitzen, die sich bereichsweise auf einer Kreisbogenlinie um eine Achse A erstreckt. In der Grifffläche des Griffs 12 erstrecken sich in Achsrichtung A verlaufende Nuten 20 und Rippen 21. Der Griff 12 besitzt insgesamt drei Flügel 17, die radial nach außen über die Kreisbogenlinie hinausragen. Es können auch mehr als drei Flügel 17 vorgesehen sein.

Die Stirnseite des Griffs 12 erstreckt sich im Wesentlichen auf einer Kreisbogenlinie und besitzt einen Durchmesser, der etwa der Breite einer Hand entspricht.

An die Grifffläche des Griffs 12 schließt sich ein Konusabschnitt 18 an. Dort erstreckt sich die Außenoberfläche des Werkzeuges auf einer Kegelstumpfmantelfläche. Die Konusfläche des Konusabschnitts 18 bildet eine erweiterte Konusfläche 19 aus, die sich über einen Flügel 17 erstreckt.

In der erweiterten Konusfläche 19 befindet sich eine Tasche 9, in der eine Schneide 7 angeordnet ist. Die Tasche 9 besitzt einen Boden, auf dem sich eine Breitseitenfläche der aus Metall gefertigten Schneide 7 abstützt. Die Schneide 7 besitzt zwei parallel zueinander verlaufende Randkanten 24, 25, zwischen denen sich eine Bohrung befindet, durch die ein Befestigungselement in Form einer Schraube 11 hindurchgreift. Die Schraube 11 ist in einen Materialfortsatz 29 der Innenseite der Wand 14 eingeschraubt.

An die Randkante 25 schließt sich unter Ausbildung einer kleinen Rundung eine Stützkante 22 an, die parallel zur Randkante 25 verläuft. An die andere Randkante 24 schließt sich eine schräge Randkante 23 an. Die zuvor beschriebenen Randkanten liegen in berührender Anlage an jeweils einem Abschnitt der Wand der Tasche 9. Die Schneide 7 liegt mit geringem Bewegungsspiel in der Tasche 9 ein.

An den Konusabschnitt 18 schließt sich eine Anschlagfläche 5 an, die in einer Ebene verläuft, zu der die Achse A orthogonal steht. Die Anschlagfläche 5 bildet eine Tiefenbegrenzung bei der Erzeugung der Fase 2. Die Anschlagfläche 5 besitzt einen radial äußeren Rand, an dem sie in den Konusabschnitt 18 übergeht und einen radial inneren Rand, an dem sie in eine Führungsflanke 4 übergeht, die von einem Zentrierfortsatz 3 ausgebildet ist. Die Anschlagfläche 5 und die Führungsflanke 4 begrenzen zusammen einen Ringraum 6. Der Ringraum 6 ist in Radialaußenrichtung und in einer von der Anschlagfläche 5 weg gerichteten Axialrichtung offen. In diesen Ringraum 6 ragt eine Schneidkante 8, die von der Schneide 7 ausgebildet ist. Die Schneidkante 8 grenzt an die Randkante 25 an und verläuft an einem Winkel im Bereich zwischen 30° und 60° zur Randkante 25. Eine Spitze der Schneidkante 8 grenzt an eine Rundung 26 an, die an die Randkante 24 angrenzt.

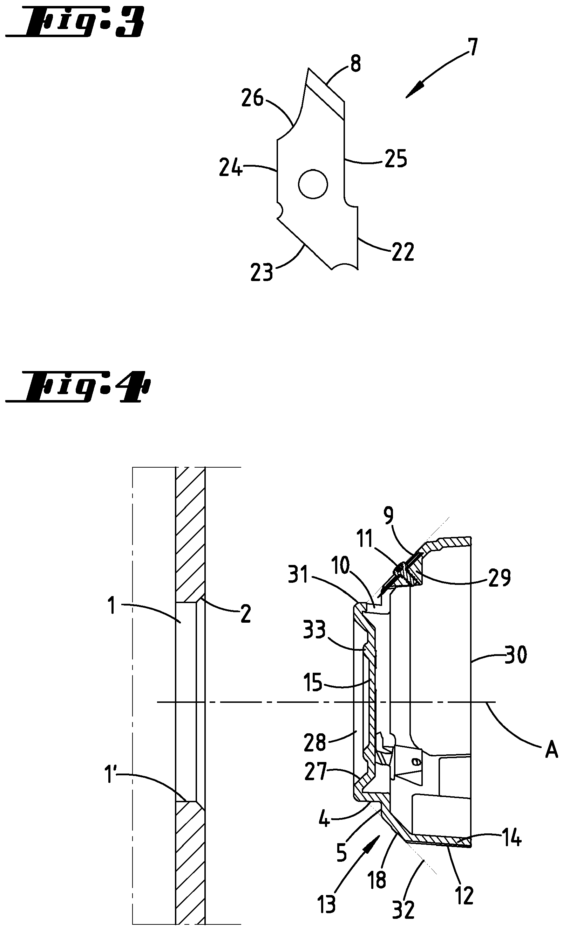

Anstelle der in der Figur 3 dargestellten Schneide 7 kann aber auch eine Schneide mit einer einfacheren Geometrie verwendet werden, bspw. eine Trapezklinge.

Die Schneide 7 greift mit dem Konuswinkel des Konusabschnitts 18 in den Ringraum 6 ein.

Die Führungsflanke 4 besitzt zu jeder Schneide 7 ein zugehöriges Fenster 10. Das Fenster 10 erstreckt sich auch über die Anschlagfläche 5. Die Öffnung der Tasche 9 mündet in den Rand des Fensters 10, so dass sich das Fenster 10 bezogen auf eine Drehrichtung D sowohl vor als auch nach der Schneide 7 erstreckt.

Die Schmalwände des Fensters 10 können schräg verlaufen, so dass der Abschnitt des Fensters in der Führungsflanke 4 eine Trapezform aufweisen kann.

Eine in der Figur 4 strichpunktiert dargestellte Linie verdeutlicht die Kegelstumpfmantelfläche 32, auf der sich die Außenwandung des Konusabschnitts 18 bzw. die erweiterte Konusfläche 19, die die Schneide 7 aufnimmt, erstreckt. Es ist ersichtlich, dass die Kegelstumpfmantelfläche 32 die Führungsflanke 4 schneidet. Die axiale Länge der Führungsflanke 4 bzw. die radiale Breite der Anschlagfläche 5 kann größer sein als die Materialstärke der Wand 14.

Die Stirnseite des Grundkörpers 13, die dem Zentrierfortsatz 3 zugeordnet ist, kann einen Boden 15 aufweisen. Der Boden 15 kann eine zurückspringende Bodenfläche aufweisen. Der Zentrierfortsatz 3 grenzt unter Ausbildung einer konusförmigen Findungsflanke 31 an die Stirnseite an. Die Findungsflanke 31 geht in eine ringförmige Ebene über, an die sich in Radialeinwärtsrichtung bezogen auf die Achse A eine Konusfläche 27 anschließt, die wiederum in den Boden 15 übergeht. Der Boden 15 kann mehrere sich in Umfangsrichtung erstreckende bogenförmige Schlitze 16 aufweisen, die insbesondere an die Konusfläche 27 angrenzen. Ein zentraler Abschnitt des Bodens 15 kann von einer kreisringförmigen Rippe 33 umgeben sein.

Die Verwendung des Werkzeugs erfolgt im Wesentlichen wie folgt: Nachdem eine Bohrung 1 zum Einsetzen einer Hohlwanddose gefertigt worden ist, wird der Zentrierfortsatz 3, dessen Außendurchmesser nur wenig geringer ist als der Innendurchmesser der Bohrung, in die Bohrung eingesetzt. Die Führungsflanke 4 des Zentrierfortsatzes 3 kann dann an einer Wand 1' der Bohrung 1 entlang gleiten. Die Spitzen der Schneidkanten 8 berühren dann den die Bohrung umgebenden Bereich der Trockenbauwand, in der sich die Bohrung befindet. Der Grundkörper 13 wird dabei von der Hand eines Benutzers umfasst. Der Durchmesser des Griffs 12 ist so gewählt, dass er bequem von der Hand eines Benutzers umfassbar ist. Die Finger und der den Fingern gegenüberliegende Daumen umfassen dabei die Grifffläche des Griffs 12. Durch Aufbringen eines leichten axialen Drucks und einer Drehbewegung in Drehrichtung D können die Schneidkanten 8 in den Rand der Bohrung eingreifen, um dort Material vom Rand der Bohrung abzutragen. Die Späne können durch die Fenster 10 hindurch fallen.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können, nämlich:

Eine Vorrichtung, die dadurch gekennzeichnet ist, dass das Antriebselement ein von einer Hand umgreifbarer Griff 12 ist.

Eine Vorrichtung, die dadurch gekennzeichnet ist, dass der Grundkörper 13 eine dünne Wand 14 aufweist, die die Führungsflanke 4, die Anschlagfläche 5 und eine Grifffläche des Griffs 12 ausbildet und/oder dass die Wand 14 des Grundkörpers 13 dünner ist als die axiale Höhe der Führungsflanke 4 oder die radiale Breite der Anschlagfläche 5.

Eine Vorrichtung, die dadurch gekennzeichnet ist, dass der schalenförmige Grundkörper 13 zum Griff 12 hin offen ist und einen einem Rand 30 des Griffs 12 gegenüberliegenden Boden 15 aufweist und/oder dass ein Boden 15 des schalenförmigen Grundkörpers 13 an den Zentrierfortsatz 3 angrenzt und insbesondere bogenförmige Schlitze 16 aufweist.

Eine Vorrichtung, die dadurch gekennzeichnet ist, dass die Grifffläche des Griffs 12 Nuten 20 und Rippen 21 und/oder radial von einer insbesondere leicht konischen Zylindermantelfläche radial abragende Flügel 17 aufweist und/oder dass der Durchmesser des Griffs 12 etwa eine Handbreit beträgt.

Eine Vorrichtung, die dadurch gekennzeichnet ist, dass sich zwischen der Anschlagfläche 5 und der sich auf einer insbesondere leicht konischen Zylindermantelfläche erstreckenden Grifffläche des Griffs 12 ein Konusabschnitt 18 erstreckt.

Eine Vorrichtung, die dadurch gekennzeichnet ist, dass der die Schneiden 7 in Taschen 9 der Außenwand des Grundkörpers 13 und insbesondere des Konusabschnitts 18 angeordnet sind und/oder dass mehrere Schneiden 7 in gleichmäßiger Umfangsverteilung um die Achse A angeordnet sind.

Eine Vorrichtung, die dadurch gekennzeichnet ist, dass die Wand 14 des Grundkörpers 13 im Bereich der Schneiden 7 Fenster 10 aufweist, wobei sich die Fenster in der Führungsflanke 4 und der Anschlagfläche 5 erstrecken und/ oder sich in einer Drehrichtung D um die Achse A sowohl vor als auch nach den Schneidkanten 8 der Schneiden 7)erstrecken.

Eine Vorrichtung, die dadurch gekennzeichnet ist, dass an die Führungsflanke 4 eine konische Findungsflanke 31 angrenzt und/oder dass die Außenwandung des Bodens 15 unter Ausbildung einer Konusfläche 27 in die Führungsflanke 4 übergeht.

Eine Vorrichtung, die dadurch gekennzeichnet ist, dass eine gedachte zu einer Kegelspitze hin verlängerte Kegelstumpfmantelfläche 32 des Konusabschnitts 18 die Führungsflanke 4 schneidet.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren, auch ohne die Merkmale eines in Bezug genommenen Anspruchs, mit ihren Merkmalen eigenständige erfinderische Weiterbildungen des Standes der Technik, insbesondere um auf Basis dieser Ansprüche Teilanmeldungen vorzunehmen. Die in jedem Anspruch angegebene Erfindung kann zusätzlich ein oder mehrere der in der vorstehenden Beschreibung, insbesondere mit Bezugsziffern versehene und/oder in der Bezugsziffernliste angegebene Merkmale aufweisen. Die Erfindung betrifft auch Gestaltungsformen, bei denen einzelne der in der vorstehenden Beschreibung genannten Merkmale nicht verwirklicht sind, insbesondere soweit sie erkennbar für den jeweiligen Verwendungszweck entbehrlich sind oder durch andere technisch gleichwirkende Mittel ersetzt werden können.

### Liste der Bezugszeichen

| | | | |
|---|---|---|---|
| 1 | Bohrung | 28 | Vertiefung |
| 1' | Wand | 29 | Materialfortsatz |
| 2 | Fase | 30 | Rand |
| 3 | Zentrierfortsatz | 31 | Findungsflanke |
| 4 | Führungsflanke | 32 | Kegelstumpfmantelfläche |
| 5 | Anschlagfläche | 33 | Rippe |
| 6 | Ringraum | | |
| 7 | Schneide | A | Achse |
| 8 | Schneidkante | D | Drehrichtung |
| 9 | Tasche | | |
| 10 | Fenster | | |
| 11 | Befestigungselement, Schraube | | |
| 12 | Antriebselement, Griff | | |
| 13 | Grundkörper | | |
| 14 | Wand | | |
| 15 | Boden | | |
| 16 | Schlitz | | |
| 17 | Flügel | | |
| 18 | Konusabschnitt | | |
| 19 | erweiterte Konusfläche | | |
| 20 | Nut | | |
| 21 | Rippe | | |
| 22 | Stützkante | | |
| 23 | schräge Randkante | | |
| 24 | Randkante | | |
| 25 | Randkante | | |
| 26 | Rundung | | |
| 27 | Konusfläche | | |

## Patentansprüche

1. Vorrichtung zum Erzeugen einer Fase (2) am Rande einer Bohrung (1) zum Einsetzen einer Hohlwanddose, mit einem Grundkörper (13), der eine von einem in die Bohrung (1) einsteckbaren Zentrierfortsatz (3) gebildeten, zumindest bereichsweise sich auf einer Zylindermantelfläche um eine Achse (A) erstreckende Führungsflanke (4) ausbildet, wobei an die Führungsflanke (4) eine sich quer zur Achse (A) erstreckende Anschlagfläche (5) angrenzt, wobei die Führungsflanke (4) und die Anschlagfläche (5) einen sich um die Achse (A) erstreckenden Ringraum begrenzen, in den Schneidkanten (8) von Schneiden (7) ragen, und mit einem vom Grundkörper (13) ausgebildeten Antriebselement zum Erzeugen einer Drehung der Schneiden (7) um die Achse (A), **dadurch gekennzeichnet, dass** das Antriebselement ein von einer Hand umgreifbarer Griff (12) ist.

2. Vorrichtung nach Anspruch 1, **dadurch gekennzeichnet, dass** der Grundkörper (13) eine dünne Wand (14) aufweist, die die Führungsflanke (4), die Anschlagfläche (5) und eine Grifffläche des Griffs (12) ausbildet und/oder dass die Wand (14) des Grundkörpers (13) dünner ist als die axiale Höhe der Führungsflanke (4) oder die radiale Breite der Anschlagfläche (5).

3. Vorrichtung nach Anspruch 2, **dadurch gekennzeichnet, dass** der schalenförmige Grundkörper (13) zum Griff (12) hin offen ist und einen einem Rand (30) des Griffs (12) gegenüberliegenden Boden (15) aufweist.

4. Vorrichtung nach Anspruch 1 oder 2, **dadurch gekennzeichnet, dass** ein Boden (15) des schalenförmigen Grundkörpers (13) an den Zentrierfortsatz (3) angrenzt und insbesondere bogenförmige Schlitze (16) aufweist.

5. Vorrichtung nach einem der vorhergehenden Ansprüche, **dadurch gekennzeichnet, dass** die Grifffläche des Griffs (12) Nuten (20) und Rippen (21) und/oder radial von einer insbesondere leicht konischen Zylindermantelfläche radial abragende Flügel (17) aufweist.

6. Vorrichtung nach einem der vorhergehenden Ansprüche, **dadurch gekennzeichnet, dass** der Durchmesser des Griffs (12) etwa eine Handbreit beträgt.

7. Vorrichtung nach einem der vorhergehenden Ansprüche, **dadurch gekennzeichnet, dass** der Durchmesser des Griffs (12) größer ist als der Durchmesser der Führungsflanke (4).

8. Vorrichtung nach einem der vorhergehenden Ansprüche, **dadurch gekennzeichnet, dass** sich zwischen der Anschlagfläche (5) und der sich auf einer insbesondere leicht konischen Zylindermantelfläche erstreckenden Grifffläche des Griffs (12) ein Konusabschnitt (18) erstreckt.

9. Vorrichtung nach einem der vorhergehenden Ansprüche, **dadurch gekennzeichnet, dass** der die Schneiden (7) in Taschen (9) der Außenwand des Grundkörpers (13) und insbesondere des Konusabschnitts (18) angeordnet sind.

10. Vorrichtung nach einem der vorhergehenden Ansprüche, **dadurch gekennzeichnet, dass** mehrere Schneiden (7) in gleichmäßiger Umfangsverteilung um die Achse (A) angeordnet sind.

11. Vorrichtung nach einem der vorhergehenden Ansprüche 2 bis 6, **dadurch gekennzeichnet, dass** die Wand (14) des Grundkörpers (13) im Bereich der Schneiden (7) Fenster (10) aufweist, wobei sich die Fenster in der Führungsflanke (4) und der Anschlagfläche (5) erstrecken und/oder sich in einer Drehrichtung (D) um die Achse (A) sowohl vor als auch nach den Schneidkanten (8) der Schneiden (7) erstrecken.

12. Vorrichtung nach einem der vorhergehenden Ansprüche, **dadurch gekennzeichnet, dass** an die Führungsflanke (4) eine konische Findungsflanke (31) angrenzt.

13. Vorrichtung nach einem der vorhergehenden Ansprüche, **dadurch gekennzeichnet, dass** die Außenwandung des Bodens (15) unter Ausbildung einer Konusfläche (27) in die Führungsflanke (4) übergeht.

14. Vorrichtung nach einem der vorhergehenden Ansprüche, **dadurch gekennzeichnet, dass** eine gedachte zu einer Kegelspitze hin verlängerte Kegelstumpfmantelfläche (32) des Konusabschnitts (18) die Führungsflanke (4) schneidet.

15. Vorrichtung, **gekennzeichnet durch** eines oder mehrere der kennzeichnenden Merkmale eines der vorhergehenden Ansprüche.
